Europäisches Patentamt

European Patent Office

Office européen des brevets

(19)

(11) Numéro de publication : **0 186 602**
**B1**

(12) # FASCICULE DE BREVET EUROPÉEN

(45) Date de publication du fascicule du brevet :
15.03.89

(51) Int. Cl.⁴ : **B 62 M 25/04**

(21) Numéro de dépôt : 85420211.6

(22) Date de dépôt : 26.11.85

(54) Dispositif de commande, de présélection et d'indexation des changements de vitesse arrière des cycles et véhicules similaires.

(30) Priorité : 28.11.84 FR 8418490
28.10.85 FR 8516322

(43) Date de publication de la demande :
02.07.86 Bulletin 86/27

(45) Mention de la délivrance du brevet :
15.03.89 Bulletin 89/11

(84) Etats contractants désignés :
AT BE CH DE GB IT LI LU NL SE

(56) Documents cités :
DE—A— 2 650 011
FR—A— 2 387 839
US—A— 4 232 564
US—A— 4 412 828

(73) Titulaire : Etablissements LE SIMPLEX (société à responsabilité limitée)
3 et 5 rue de la Breuchillière Zône Industrielle Dijon St-Apollinaire
F-21019 Dijon Cedex (FR)

(72) Inventeur : Juy, Henri
43 rue Chabot Charny
F-21000 Dijon (FR)

(74) Mandataire : Dupuis, François et al
Cabinet Charras 3 Place de l'Hôtel-de-Ville
F-42000 St.Etienne (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 186 602 B1

## Description

L'invention se rattache au secteur technique des accessoires et équipements de cycles, notamment des changements de vitesse et leur moyen de commande.

On connaît pour les changements de vitesse pour cycles, des systèmes permettant de présélectionner les vitesses soit à l'arrêt, soit en cours de pédalage. A ce jour, les différents systèmes proposés présentent des inconvénients.

Par exemple, certains systèmes ne permettent une présélection des vitesses que dans un sens, celui de la montée généralement. D'autres s'avèrent très compliqués aussi bien en ce qui concerne leur principe de fonctionnement que les moyens de mise en œuvre.

De plus, d'une manière importante, de par leur conformation, un déplacement angulaire important du levier de manœuvre est nécessaire rendant difficile, voire impossible, une manœuvre sans lâcher le guidon, c'est-à-dire avec un seul doigt, généralement le pouce.

Certains dispositifs remédient à ces inconvénients et sont manœuvrables par de simples impulsions. Toutefois, d'autres inconvénients apparaissent alors au niveau de la commande proprement dite et plus particulièrement au niveau de la transmission avec le changement de vitesse. Le document FR-A-2 387 839, conforme au préambule des revendications 1 et 10, décrit un tel système.

En effet, les manettes, leviers ou autres organes de manœuvre dits à impulsion sont reliés au dérailleur par une tige métallique semi-rigide ou genre corde à piano nécessitant de plus une gaine de protection obligatoirement incompressible et inextensible. Dans les dispositifs connus à ce jour, l'utilisation d'un câble classique de transmission n'est pas possible compte-tenu de la conception même du câble susceptible de subir, lors de la manœuvre du levier de commande, des allongements et tassements qui entraînent une imprécision très importante de la commande.

La présente invention a pour but de remédier à ces inconvénients. Ce but est atteint grâce aux caractéristiques des revendications 1 et 10.

L'invention telle qu'elle est caractérisée dans les revendications, résout le problème consistant à créer un dispositif de commande pour dérailleur arrière dans lequel le levier de manœuvre est conformé et agencé pour coopérer avec des moyens de commande, de réglage et d'indexation, lesdits moyens, en combinaison avec le levier, à partir d'une position neutre étant aptes à assurer dans un premier temps, d'une part la mise sous tension ou détension du câble à chaque inversion du sens de pivotement exercé sur le levier et, d'autre part, dans un deuxième temps, agir sur ledit câble pour le déplacement transversal du guide-chaîne pour le passage ou la sélection d'une ou plusieurs vitesses selon qu'il y a ou non action de pédalage.

A partir de cette conception de base, l'invention prévoit une première solution mettant en œuvre des moyens conformes pour être commandés à partir d'un levier manœuvrable par de simples impulsions et une seconde solution mettant en œuvre des moyens coopérant avec un levier de commande déplaçable angulairement dans un sens ou dans l'autre.

Les avantages obtenus grâce à cette invention consistent essentiellement en ce qu'à chaque inversion du sens de pivotement du levier, avant l'action proprement dite sur le changement de vitesse, on obtient la tension ou détension du câble de commande, en vue d'une commande très précise dudit changement de vitesse. Le câble de commande utilisé est classique c'est-à-dire du type de ceux couramment employés dans les cycles, ledit câble étant logé dans une gaine de protection également de conception connue.

L'invention est exposée ci-après plus en détail, à l'aide des dessins qui représentent les différents modes d'exécution selon l'invention.

La figure 1 est une vue en perspective de l'ensemble du dispositif, selon une première forme de réalisation,

la figure 2 est une vue en perspective, en alignement et en ordre de montage des différents éléments constitutifs de l'organe de commande à impulsion,

la figure 3 est une vue en coupe longitudinale de l'organe de commande à impulsion,

la figure 4 est une vue en coupe considérée selon la ligne 4.4 de la figure 3,

les figures 5 et 6 sont à une échelle plus importante des vues partielles en coupe considérées respectivement selon les lignes 5.5 et 6.6 de la figure 3,

les figures 7, 8, 9, 10, 11 sont des vues à caractère schématique illustrant le principe de fonctionnement de l'organe de commande à impulsion pour d'une part, la tension ou détension du câble et, d'autre part, le passage des vitesses,

les figures 12, 13, 14, 15 sont des vues à caractère schématique montrant le principe de fonctionnement d'un exemple de réalisation d'un dérailleur arrière, adapté pour être commandé par l'une quelconque des formes de réalisation du levier,

la figure 16 est une vue partielle de face montrant un exemple de réalisation pour le réglage du dérailleur,

la figure 17 est une vue en coupe transversale considérée selon la ligne 17.17 de la figure 12,

la figure 18 est une vue en perspective, en alignement et en ordre de montage, des différents éléments constitutifs de l'organe de commande à sélection, selon une autre forme de réalisation,

la figure 19 est une vue de profil de l'ensemble de l'organe de commande monté sur une partie de la bicyclette,

la figure 20 est une vue en coupe transversale de l'ensemble,

la figure 21 est une vue de face du secteur rotatif,

la figure 22 montre la face interne du levier,

la figure 23 est une vue en coupe considérée selon la ligne 23.23 de la figure 19, en position de repos et avant tension du câble,

la figure 24 montre la tension du câble,

la figure 25 est une vue correspondant à la figure 24, après sélection de plusieurs vitesses, le levier étant représenté en position de butée de fin de course,

la figure 26 est une vue correspondant à la figure 25 montrant la détension du câble.

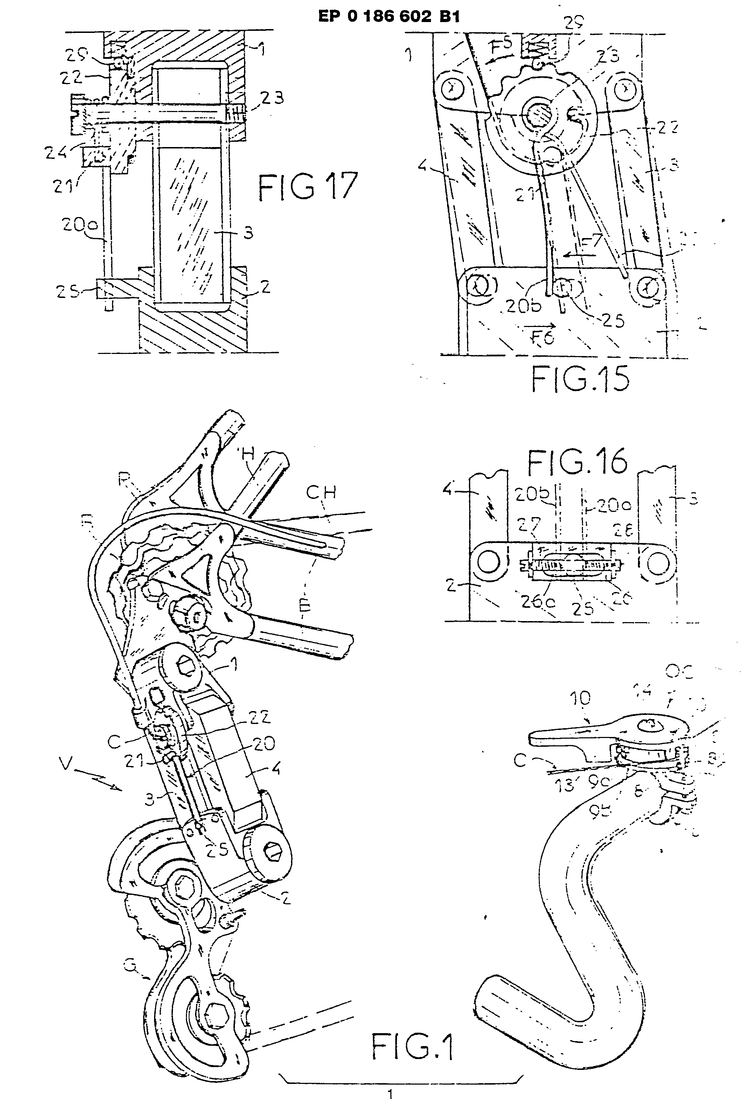

Pour une meilleure compréhension de la suite de la description, la figure 1 montre la partie arrière d'un cadre de bicyclette notamment les haubans (H) et les bases (B) avec les pattes de fixation (P), le moyeu de la roue arrière équipé de la roue libre (R). Un changement de vitesse (V) du type à parallélogramme déformable est monté à articulation élastique en combinaison avec l'axe de la roue, au moyen par exemple d'une patte.

D'une manière connue et selon l'exemple illustré, le changement de vitesse comprend pour l'essentiel, une chape support supérieure (1) et une chape support inférieure (2) reliées à articulation par deux biellettes (3) et (4) afin de constituer le parallélogramme déformable pour le déplacement transversal de la chaîne (CH) sur la roue libre (R).

La chape inférieure (2) reçoit d'une manière connue, un guide-chaîne (G) assujetti à un organe élastique de rappel, ledit guide-chaîne portant à rotation libre des galets d'enroulement, en tension de la chaîne.

Le changement de vitesse, notamment par le déplacement du guide-chaîne (G), est asservi par câble (C) à un organe de commande manuelle. D'une manière préférée, quoique non rigoureusement limitative, l'organe de commande est conçu pour être fixe sur le guidon de la bicyclette à proximité de la main de l'utilisateur en position normale de pédalage. On n'exclut pas de fixer l'organe de commande sur le tube diagonal, le tube supérieur éventuellement la potence.

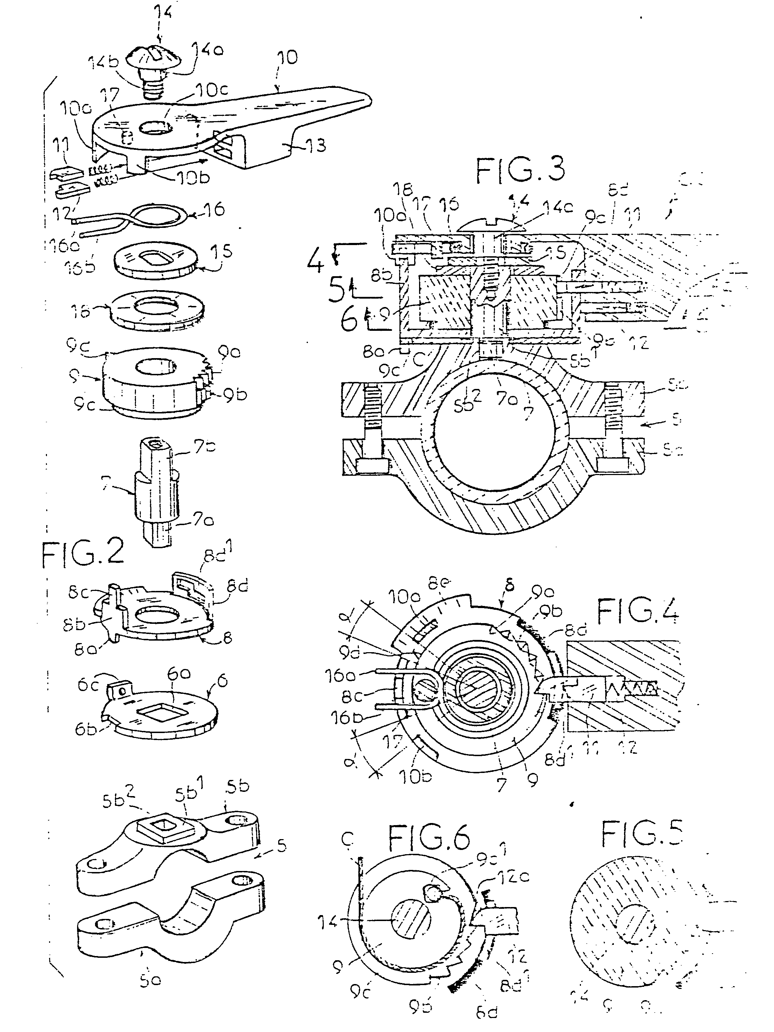

Quel que soit l'endroit de fixation, l'organe de commande comprend les éléments essentiels suivants comme il ressort plus particulièrement de la figure 2 des dessins.

La fixation de l'organe de commande, désigné dans son ensemble par (OC) s'opère par exemple au moyen d'un collier (5) en deux demi-parties (5a) et (5b). Le demi-collier supérieur (5b) présente une portée polygonale (5b1) pour le montage et l'indexation angulaire d'un secteur (6) présentant à cet effet une ouverture complémentaire (6a).

D'une manière connue, la portée (5b1) présente une ouverture axiale à méplat (5b2) pour l'emmanchement et l'indexation d'une portée correspondante (7a) d'un axe pivot (7).

Sur la portée cylindrique de l'axe pivot (7) sont montés en superposition et à libre rotation, une plaque circulaire d'indexation et de réglage (8) et un tambour d'entraînement (9) auquel est relié le câble de commande (C) de changement de vitesse. Un levier de manœuvre (10) actionnable digitalement est conformé et agencé pour coopérer avec le tambour (9) et la plaque d'indexation (8) en vue de leur entraînement concomitant ou séparé pour, d'une part, assurer la mise sous tension ou détension du câble à chaque inversion de sens du levier et, d'autre part, agir sur le changement de vitesse en vue de sélectionner une ou plusieurs vitesses ou bien autoriser le passage d'une ou plusieurs vitesses sous l'action de pédalage.

Dans ce but, la plaque circulaire (8) présente en débordement de sa face inférieure, à proximité de son bord périphérique, un ergot (8a) coopérant après montage de la plaque (8) sur l'axe (7), avec une encoche (6b) formée à partir du bord périphérique du secteur (6). En alignement avec l'ergot (8a) et d'une manière axiale, la plaque (8) présente en débordement de sa face supérieure, une languette verticale (8b) dont l'extrémité libre est équipée, dans sa partie médiane, d'un bossage (8c). D'une manière diamétralement opposée à la languette (8b), la plaque (8) présente verticalement, en saillie de sa face de dessus, un secteur (8d) avec une ouverture étagée (8d1). Comme il est indiqué dans la suite de la description, ce secteur vertical fait office de masque.

Le tambour (9) est monté en superposition de la plaque (8) précédemment décrite, l'ensemble étant libre en rotation sur la portée cyclindrique de l'axe pivot (7). Le diamètre du tambour est déterminé de façon à pouvoir tourner entre les parois de la languette (8b) et du secteur (8d) avec le jeu fonctionnel nécessaire.

Une partie de la périphérie du tambour (9) présente deux rangées superposées de dentures (9a) et (9b) susceptibles de coopérer respectivement avec deux cliquets superposés (11) et (12) montés dans un support (13) que présente une partir du levier de manœuvre (10). Après montage du tambour (9), les dentures (9a) et (9b) sont disposées en regard du masque (8d) notamment des parties correspondantes de l'ouverture étagée (8d1). Les cliquets (11) et (12) sont assujettis à un organe élastique tel que ressort afin de pousser constamment lesdits cliquets vers l'avant, en direction des dentures respectives.

D'une manière importante, les deux dentures (9a) et (9b) sont de pas opposés pour autoriser l'entraînement dans un sens ou dans l'autre du tambour lors d'une impulsion angulaire exercée sur le levier (10). Les parties actives profilées (11a) et (12a) des cliquets sont disposées inversement l'une par rapport à l'autre en combinaison avec le profil correspondant des dentures (9a) et (9b). D'une manière connue, les dentures ont une face perpendiculaire aux génératrices du tambour (9) pour son entraînement par le cliquet correspondant et une face inclinée pour l'échappement dudit cliquet.

Le masque (8d) permet de retenir les cliquets (11) ou (12) lorsqu'ils sont en contact avec sa surface pleine ou de les laisser passer lorsqu'ils sont en correspondance avec l'ouverture étagée (8d1) dudit masque.

Le tambour (9) présente une gorge circulaire (9c) pour l'enroulement du câble de commande (C) dont l'extrémité est positionnée fixement dans un logement profilé (9c1). Comme déjà indiqué, d'une manière particulièrement importante, le câble (C) est du type de ceux employés couramment sur les bicyclettes c'est-à-dire une série de brins torsadés. On souligne que le secteur (6) présente une patte équerrée (6c) pour le passage du câble (C) et pour faire office de support à la gaine de protection dudit câble. Ce levier de manœuvre (10) présente au niveau de sa partie d'articulation, deux pattes espacées recourbées vers le bas (10a) et (10b). Après montage du levier (10) en superposition du tambour (9) et de la plaque (8), les deux pattes (10a) et (10b) sont positionnées de part et d'autre de la languette verticale (8b) relative à la plaque (8).

Dans ce but, le levier (10) est monté en combinaison avec une vis (14) qui présente une portée circulaire lisse (14a) prolongée en bout par une partie filetée (14b) de diamètre inférieur. Le corps de la vis (14) est engagé librement dans l'alésage d'une portée circulaire interne (10c) du levier (10).

La portée lisse (14a) de la vis (14) après vissage de la partie filetée (14b) dans l'axe pivot (7), prend appui par l'intermédiaire d'une rondelle (15) sur un ou des moyens de friction (18) en appui sur le tambour (9). La rondelle (15) est immobilisée en rotation sur une portée à méplat (7b) de l'axe pivot (7), le ou les moyens de friction étant par exemple des rondelles. On conçoit donc qu'en vissant plus ou moins la vis (14), on exerce une force de pression variable sur l'ensemble tambour (9) plaque (8).

Un ressort de rappel (16) est convenablement enroulé autour de la portée interne (10c) du levier, les brins libres d'extrémités (16a) et (16b) dudit ressort, après entrecroisement, sont disposés parallèlement et positionnés en butée de part et d'autre du bossage (8c) de la languette (8b). Un ergot (17), formé en débordement de la face de dessous du levier, assure le positionnement relatif des deux brins (16a) et (16b).

Ce ressort (16) tend à rappeler constamment en position neutre le levier (10), position dans laquelle les deux pattes recourbées (10a) et (10b) sont équidistantes selon une valeur (α) des bords de la languette (8b) qui fait ainsi office de butée de limitation. Toujours dans cette position neutre, les deux dentures (9a) et (9b) du tambour (9) se trouvent positionnées en regard des cliquets (11) et (12) du levier.

D'une manière importante, il ressort que selon cette conception de montage des différentes pièces constitutives de l'organe de commande, seuls le tambour (9) et la plaque (8) sont soumis à une force de pression, le levier de manœuvre (10) demeurant libre en rotation.

En position neutre, la valeur angulaire (α) correspond à l'amplitude nécessaire exercée par le levier pour permettre une action sur le changement de vitesse en vue du déplacement correspondant du guide-chaîne pour le passage d'une vitesse. Le nombre de dents de chacune des dentures (9c) et (9b) du tambour est identique et fonction du nombre de pignons de la roue libre. Si (n) est le nombre de pignons, le nombre de dents sera égal à (n — 1).

On décrit maintenant le fonctionnement du moyen de commande du changement de vitesse quel que soit le mode d'exécution de ce dernier. Le câble (C) est convenablement relié au tambour et au dérailleur pour le déplacement du guide-chaîne (G). On suppose réalisé le réglage entre le levier et le dérailleur de sorte que, en position d'alignement du guide-chaîne avec le plus petit pignon (ou le plus grand) de la roue libre (R), les parties actives des cliquets sont disposées en regard de l'une des extrémités des rangées dentées (9a) et (9b) du tambour (9).

Prenons par exemple le cas où l'utilisateur désire monter ses vitesses : les parties actives des cliquets (11) et (12) sont en prise avec les dents correspondantes (9a) et (9b) du tambour (9) au travers de l'ouverture étagée (8d1) du masque (8d). Une simple impulsion digitale sur le levier de commande (10) (flèche F10) a pour effet :

dans un premier temps, le cliquet (11) étant en prise avec une dent (9a) du tambour (9), ledit tambour est déplacé angulairement et entraîne concomitamment la plaque (8) de par la force de friction entre le tambour et la plaque réglée par la vis (14) jusqu'à ce que ladite plaque vienne en butée, de par son ergot (8a), dans l'encoche (6b) du secteur. Ce déplacement angulaire limité (β) de l'ensemble plaque-tambour correspond dans le cas de la montée, à la tension du câble de commande (figure 8),

dans un deuxième temps, la plaque (8) étant toujours en butée et par conséquent immobilisée angulairement, seul le tambour est entraîné par le levier (10) jusqu'à ce que la patte recourbée (10a) arrive en butée avec le bord vertical correspondant de la languette (8b). Ce déplacement angulaire (α) provoque le déplacement transversal correspondant du guide-chaîne (G) pour le passage d'une vitesse. Dans cette position, l'un des brins d'extrémités (16a) du ressort (16) est en appui sur le bossage (8c) de la plaque (8) tandis que l'autre brin (16b) a tendance à s'écarter dudit bossage (figure 9) et est sollicité en tension par l'ergot (17) du levier (10).

Si l'on relâche l'appui digital exercé sur le levier, celui-ci, sous l'effet de détente du ressort (16), revient en position neutre du fait qu'il n'est pas freiné angulairement, le tambour (9) demeurant en position du fait de l'échappement du cliquet sur la face inclinée de la dent considérée. De même, le masque (8d) empêche la prise de l'autre cliquet (12) à la denture correspondante (9b) du tambour. Aucune force n'étant exercée sur le bossage (8c) par le brin (16b), il en résulte également que la plaque (8) demeure en position de butée dans l'encoche du secteur (6) de sorte que le câble demeure ainsi sous tension (figure 10).

Pour le passage d'une vitesse suivante, toujours dans le sens de la montée, il suffit de donner une nouvelle impulsion sur le levier (10) et ainsi de suite.

Inversement, si l'utilisateur exerce sur le levier (10) une force d'appui digitale (F20), le guide-chaîne sera déplacé transversalement en sens inverse pour descendre les vitesses. De la même façon que pour la montée :

dans un premier temps, le déplacement angulaire du levier entraîne concomitamment le tambour (9) et la plaque (8), la partie active du cliquet (12) étant en prise avec la denture (9b), jusqu'à la position de butée de l'ergot (8a) de ladite plaque (8) dans l'échancrure (6b) du secteur (6). Le déplacement angulaire limité (β1) de l'ensemble plaque (8)-tambour (9) correspond, dans le cas de la descente, à la détension du câble de commande (figure 11),

dans un deuxième temps, la plaque (8) étant toujours en butée, le tambour est entraîné par le levier jusqu'à ce que la patte recourbée (10b) dudit levier arrive en butée avec l'autre bord vertical correspondant de la languette (8b). Ce pivotement angulaire (α) provoque, comme indiqué précédemment, le déplacement transversal du guide-chaîne (G) pour le passage d'une vitesse (descente dans ce cas).

On voit donc qu'à chaque inversion de sens de pivotement angulaire du levier, on opère, avant l'action proprement dite, sur le changement de vitesse, la tension ou la détension selon le cas, du câble de commande, ce qui s'avère très important et particulièrement avantageux pour la précision de la commande dudit changement de vitesse.

L'organe de commande étant ainsi réalisé est particulièrement bien adapté pour l'indexation et la sélection des vitesses. Par exemple, la plaque (8) peut présenter en débordement de son bord périphérique, dans un même plan, un secteur (8e) sur lequel sont marqués des chiffres correspondant au nombre de vitesses à passer tandis que le tambour (9) peut être équipé d'un index (9d) se présentant en regard de ces chiffres. Il suffit alors d'afficher la vitesse que l'on désire passer en procédant par impulsions successives sur le levier de manœuvre (10).

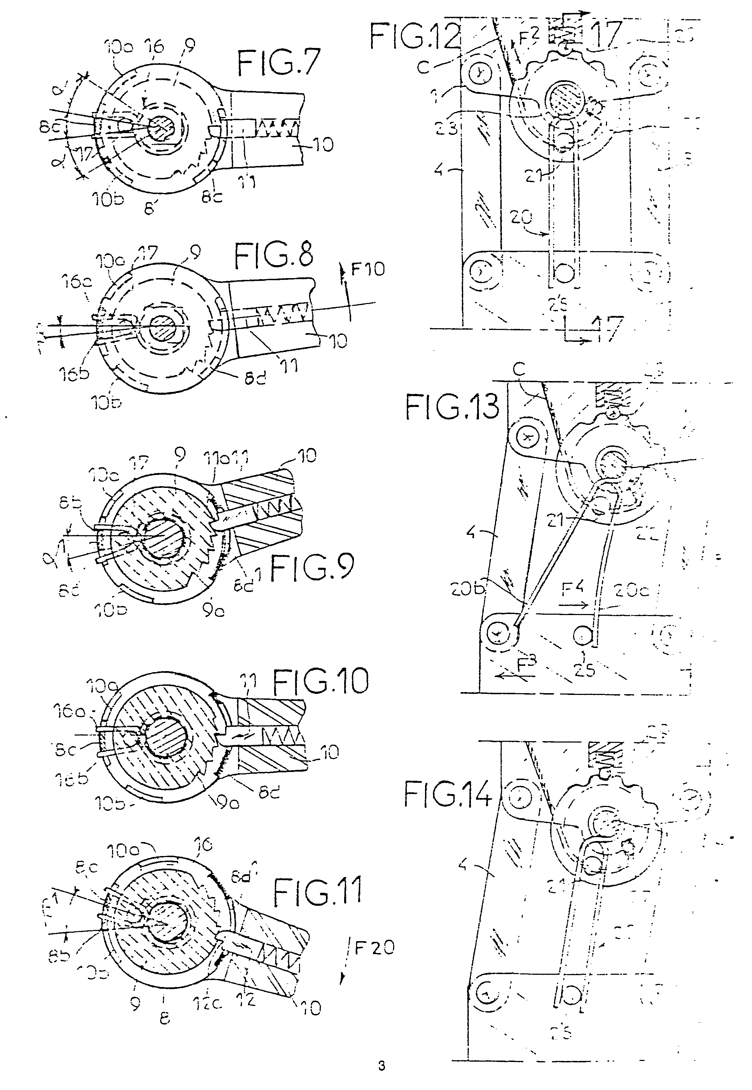

Il est aussi possible d'afficher et de mémoriser le nombre de vitesses avant l'action de pédalage proprement dite. Dans ce but, l'organe de commande décrit se combine d'une manière avantageuse avec le changement de vitesse illustré figure 1 et dont le principe de fonctionnement est plus particulièrement montré aux figures 12 à 15.

Une partie de la chape support supérieure (1) reçoit un ressort de torsion (20) dont les deux brins d'extrémités (20a) et (20b) sont entrecroisés à partir d'un maneton (21) pour s'étendre parallèlement de part et d'autre d'un pion (25) que présente une partie de la chape support inférieure (2). Le maneton (21) est disposé facialement en débordement d'un tambour (22) monté en rotation sur un axe (23) solidaire de la chape (1) en étant assujetti à un ressort de rappel (24). Le tambour est disposé entre les deux biellettes (3) et (4) du parallélogramme, de même que le pion (25), étant bien évident que ce pion (25), peut être disposé sur tout ou partie mobile du parallélogramme déformable (3-4).

Le ressort (20) est enroulé par exemple sur un prolongement de l'axe (23) du tambour (22).

Le câble de commande (C) enroulé sur le tambour (9) du levier de manœuvre, est relié fixement au tambour (22) de sorte qu'une traction exercée sur ledit câble par l'intermédiaire du levier, entraîne circulairement ledit tambour (22).

Il en résulte le fonctionnement suivant : on suppose par exemple que l'utilisateur désire monter ses vitesses. Dans ce but, il agit sur le levier de manœuvre (10) en donnant une seule impulsion pour le passage d'une seule vitesse ou plusieurs impulsions pour afficher la vitesse souhaitée. Le câble (C) est ainsi soumis à une force de traction (F2) (figure 12) ce qui a pour effet d'entraîner circulairement le tambour (22).

La rotation du tambour (22), par son maneton (21) en combinaison avec les brins (20a) et (20b) du ressort (20) coopérant avec le pion (25), notamment avec le brin (20a), déplace transversalement le support inférieur (2) du changement de vitesse (flèche F3) et par conséquent le guide-chaîne. Le ressort (20) est déformé, le brin (20a) est soumis à une force de réaction (F4) résultant de sa position de contact avec le pion (figure 13). Le ressort (20) n'est donc plus en position d'équilibre tant qu'aucune action de pédalage n'a lieu. Le tambour (22) demeure en position correspondant à la vitesse sélectionnée. La chaîne fait butée pour le déplacement du support inférieur (2). A noter que la tension du ressort de rappel (24) du tambour (22) est inférieure à la force de traction du câble (C).

Au fur et à mesure du pédalage et en conséquence du déplacement du support inférieur 2, le ressort a tendance à reprendre sa position d'équilibre, de sorte que les deux brins (20a) et (20b) sont soumis respectivement à deux forces de même intensité et de direction opposée (figure 14).

Pour la descente, on agit sur le levier de manœuvre (10) selon le sens inverse au précédent en donnant une seule impulsion (passage d'une seule vitesse) ou plusieurs impulsions pour afficher la vitesse désirée.

Le câble (C) se trouve détendu de sorte que le tambour (22) par son ressort de rappel (24) précédemment sous tension, se déplace circulairement selon la flèche (F5). Le brin (20b) du ressort (20) déplace transversalement le support inférieur (2) selon la flèche (F6) au moyen notamment du pion (25).

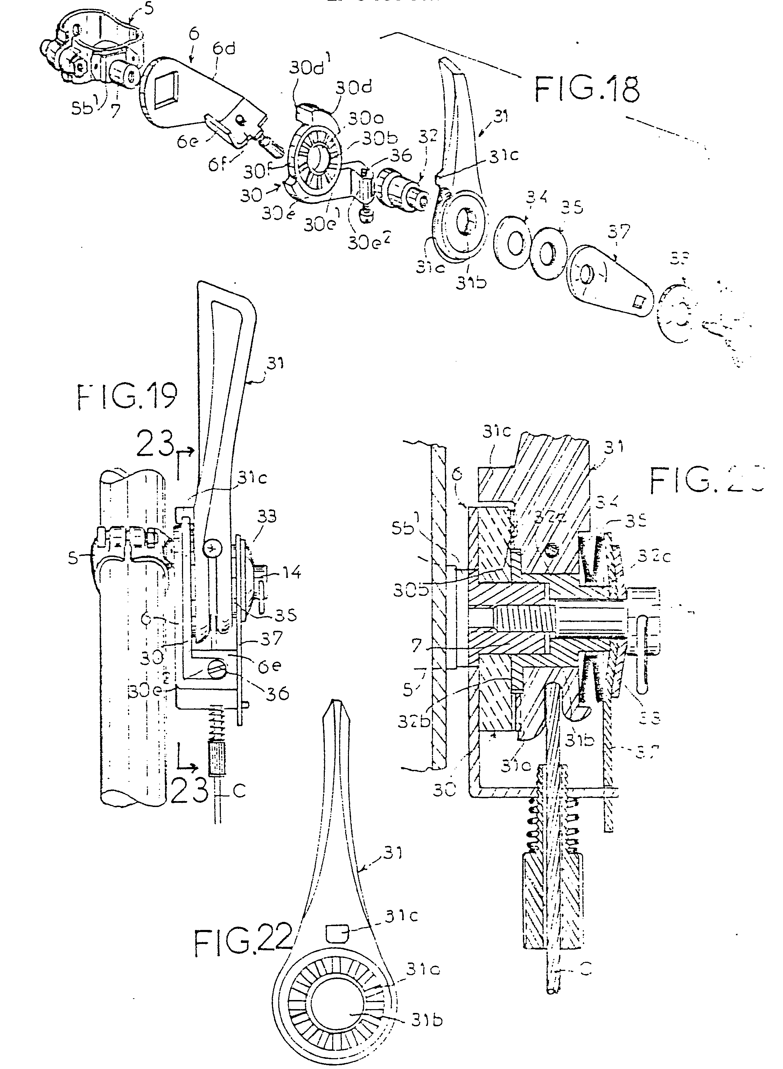

Si aucune action de pédalage n'a lieu, le ressort (20) est déformé et n'est plus en position d'équilibre, le pion (25) exerce sur le brin (20b) une force de réaction (F7) (figure 15). Le tambour (22) demeure en position en correspondance avec la vitesse sélectionnée.

Aussitôt l'action de pédalage, la force de réaction (F7) tend à s'annuler de sorte que le ressort (20) reprend sa position d'équilibre (figure 15), chacun des brins (20a) et (20b) est soumis à une force de même intensité.

Il est nécessaire de prévoir un réglage du changement de vitesse ainsi réalisé afin de se mettre en alignement sur la première denture. Dans ce but, le pion (25) est assujetti à des moyens conformés pour permettre son réglage en translation par rapport à la denture.

Par exemple, le pion (25) est monté dans une lumière oblongue (26a) formée dans une patte (26) que présente directement ou d'une manière rapportée, la chape support inférieure (2). Le pion (25) est traversé par une vis (27) bloquée en translation tandis que des moyens (28) permettent d'agir en rotation sur la vis en vue du déplacement du pion (25) pour son réglage, étant bien évident que d'autres moyens de réglage peuvent être prévus, notamment en faisant varier angulairement le tambour (22).

On doit souligner que si les deux brins (20a) et (20b) du ressort (20) sont en contact à la fois sur le maneton (21) et le pion (25) (qui sont de même diamètre), aucun jeu n'apparaît au niveau de l'ensemble du parallélogramme. Par contre, si le diamètre du maneton (21) est supérieur à celui du pion (25), les deux brins (20a) et (20b) se trouvent en contact seulement avec ledit maneton engendrant ainsi un jeu latéral pour l'ensemble du parallélogramme ce qui permet un auto-centrage.

Eventuellement, la périphérie du tambour (22) peut être partiellement crantée et coopérer avec une bille (29) asservie à un ressort pour bien « marquer » le passage ou la sélection de chacune des vitesses dans un sens ou dans l'autre.

Il est bien évident que le dérailleur ainsi décrit est équipé d'une manière connue des organes de réglage, de fixation et de protection. Il résulte donc de ce qui précède que la combinaison des éléments principaux du dispositif selon l'invention, à savoir l'organe de commande (OC) et le dérailleur arrière, permet l'affichage et la mémorisation de la vitesse désirée en agissant par de simples impulsions digitales et en utilisant un câble de commande classique c'est-à-dire constitué par une pluralité de brins torsadés. On a donc réalisé une commande sélective à impulsion en utilisant un câble et une gaine du type de ceux couramment employés pour les cycles.

La forme de réalisation illustrée aux figures 18 à 26 correspond à une exécution simplifiée du dispositif selon laquelle le levier de commande pour la présélection et l'indexation des vitesses est susceptible d'être manœuvré digitalement selon deux sens inverses de pivotement.

Sur une portée cylindrique de l'axe (7) est monté libre en rotation, un secteur profilé (30) qui présente des agencements conformés pour coopérer en position de butée avec des parties correspondantes du secteur fixe de base (6), selon deux positions angulaires extrêmes dudit secteur (30). Ces deux positions de butée correspondent, comme indiqué dans la suite de la description, à la tension ou détension du câble de commande (C) sous l'effet de pivotement du levier de manœuvre (31).

Le secteur mobile (30), concentriquement à son alésage (30a), présente directement ou d'une manière rapportée une série de profils en creux et en relief sous forme de dents (30b) régulièrement réparties sur une circonférence en étant équidistantes. Les parties en creux et en relief de cette denture (30b) coopèrent respectivement avec les parties en relief et en creux d'une denture complémentaire (31a) formées directement ou d'une manière rapportée sur la face interne du levier (31), concentriquement à son alésage (31b). Le profil en section des parties en creux et en relief des dentures (30b) et (31a) est déterminé de façon à ce que le secteur mobile (30) et le levier (31) puissent avoir un mouvement rotatif l'un par rapport à l'autre tout en autorisant une indexation lorsque les parties en relief de l'une des dentures correspondent aux parties en creux de l'autre denture.

Le levier (31) est monté tournant sur une portée cylindrique (32a) d'un axe entretoise (32) dont la base présente un épaulement circulaire (32b) qui prend appui sur une portée annulaire (30c) du secteur mobile (30) résultant de la différence de ce diamètre entre l'alésage de la denture circulaire (30b) et l'alésage (30a) dudit secteur. Cet axe entretoise cylindrique épaulé (32) est creux pour autoriser l'engagement de la vis de fixation (14) dans l'axe pivot (7). Cette vis (14) prend appui par l'intermédiaire d'une rondelle (33) sur un ou des moyens élastiques (34) et (35) sous forme de rondelles élastiques engagées autour d'une portée débordante (32c) de l'entretoise et en appui sur une partie du levier (31). L'axe entretoise (32) après serrage de la vis (14), transmet donc une force de friction en regard du secteur rotatif (30) de sorte que, sous l'effet de pivotement angulaire du levier (31), ledit secteur (30) est entraîné angulairement d'une manière concomitante jusqu'à sa position de butée avec le secteur fixe (6). Une rondelle droite (37) est montée en combinaison avec la vis de fixation (14) en étant indexée angulairement sur une languette équerrée du secteur fixe (6). Cette plaquette (37) évite le desserrage de la vis (14).

Le secteur mobile (30) présente dans un même plan horizontal, en débordement de son bord circulaire et en débordement du bord circulaire du secteur fixe (6), deux parties profilées (30d) et (30e) qui délimitent, en combinaison, une échancrure en arc de cercle (30f). De part et d'autre de cette échancrure (30f), les extrémités correspondantes des parties profilées (30d) et (30e) font office de butée aux positions extrêmes de pivotement du levier qui présente à cet effet, un ergot (31c) formé en débordement de sa face interne.

L'angle au centre (θ) délimité par les extrémités des parties profilées (30d) et (30e), correspond au débattement angulaire maximum du levier (31) fonction du nombre de vitesses.

La partie profilée (30d) du secteur (30) présente en débordement de la face de dessous du secteur (30) un bossage (30d1) pour venir en butée avec un bord rectiligne (6d) du secteur fixe (6). L'autre partie profilée (30e) est prolongée par une branche (30e1) qui présente en bout, à l'opposée de l'échancrure (30f), un bossage équerré (30e2) susceptible de coopérer avec une branche équerrée (6e) d'une languette verticale (6f) du secteur (6). Les deux bossages (30d1) et (30e2) sont convenablement décalés angulairement en hauteur pour autoriser une latitude de pivotement limité (δ) du levier (31) et du secteur (30) par rapport au secteur fixe (6), résultant de la position de butée de l'un desdits bossages en égard à la partie correspondante (6d) ou (6e) dudit secteur fixe (6).

D'une manière importante, l'une des deux butées (30d1) ou (30e2) est réglable afin de limiter à volonté le déplacement angulaire relatif du secteur mobile (30) par rapport au secteur fixe (6). Par exemple, une vis (36) est engagée dans l'épaisseur du bossage équerré (30e2) pour coopérer avec la branche verticale correspondante (6e) de la languette (6f) du secteur (6).

On souligne que la languette (6f) est agencée pour permettre le passage du câble (c) accouplé au levier (31) et pour faire office de support à la gaine de protection dudit câble. Il convient maintenant d'analyser le fonctionnement du dispositif.

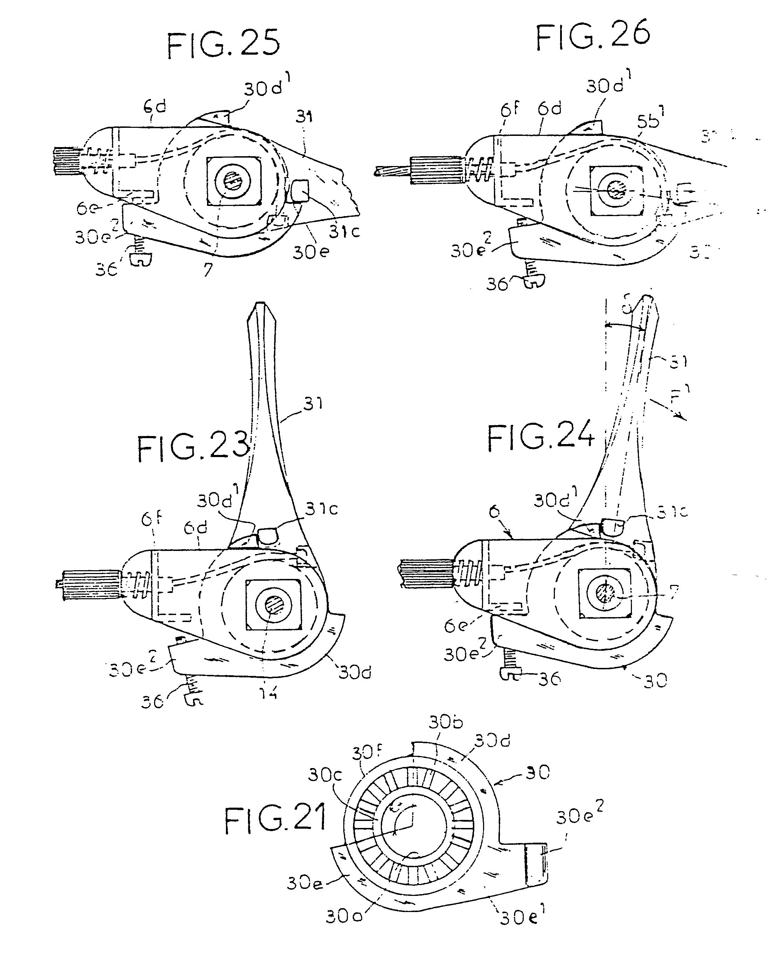

La figure 23 montre le levier de commande dans la position de départ de montée des vitesses, le bossage (30d1) étant en butée sur la plage (6d) du secteur fixe (6). Si on agit angulairement sur le levier (31) dans le sens (F1) de la flèche (figure 24), le secteur mobile (30) est déplacé concomitamment compte-tenu de la pression qui existe entre les deux dentures (30b) et (31a) du secteur (30) et du levier (31) exercée par l'intermédiaire des deux rondelles élastiques de friction (34) et (35). Le secteur (30) est déplacé angulairement d'une valeur limitée (δ) jusqu'en position de butée du bossage (30e2) avec le bord rectiligne (6e) du secteur (6), ce secteur (30) est maintenu dans cette position sur le secteur fixe (6) par la force de friction exercée par la vis (14) et transmise par l'axe entretoise (32), le bossage (30d1) étant dégagé d'une valeur correspondante. Ce déplacement angulaire limité (δ) correspond, dans le cas de la montée, à la tension du câble de commande (c) et au tassement de la gaine.

Si l'on continue à agir selon la flèche (F1) sur le levier (31), ce dernier est déplacé par rapport au secteur mobile (30) toujours en butée sur la partie correspondante du secteur fixe (6) de sorte que la denture (31a) dudit levier (31), échappe successivement les aspérités en creux et en relief de la denture du secteur (30). Chaque passage de dents correspond à la sélection ou au passage d'une vitesse. Le levier (31) peut être actionné jusqu'à la position de butée de son ergot (31c) sur l'extrémité correspondante du bossage (30e) (figure 25).

Inversement, si on exerce sur le levier (31) une forme (F) opposée à la précédente, le secteur mobile (30) est déplacé d'une valeur (δ) jusqu'à la position de butée du bossage (30d1) sur la portée (6d) du secteur fixe (6). Ce déplacement angulaire limité (δ) correspond, dans ce cas, à la détnsion du câble (C) et relâchement de la gaine, figure 26. En continuant d'agir dans ce sens sur le levier, on opère la sélection ou le passage d'une vitesse comme indiqué précédemment.

D'une manière importante, on voit que la mise sous tension ou détension du câble s'effectue seulement à chaque inversion du sens de pivotement du levier de sorte que, tant que l'on agit sur le levier dans un même sens, le problème de la tension ou détension du câble n'intervient pas. On obtient donc une sélection précise de chaque vitesse à chacun des déplacements successifs indexés du levier. Le levier peut présenter un index coopérant par exemple avec des chiffres marqués sur une partie appropriée du secteur mobile (30).

Comme dans la réalisation précédente, à chaque inversion du sens de pivotement du levier, on opère, avant l'action proprement dite sur le changement de vitesse, la tension ou la détension, selon le cas, du câble de commande ce qui s'avère particulièrement avantageux pour la précision de la commande dudit changement de vitesse. De même, cette forme de réalisation du levier s'applique aussi à la commande d'un dérailleur arrière dont le principe de fonctionnement a été décrit et illustré aux figures 12 à 17.

**Revendications**

1. Dispositif de commande, de présélection et d'indexation des changements de vitesse pour cycles et véhicules similaires du type de ceux conformés pour déplacer transversalement un guide-chaîne par rapport aux pignons étagés solidaires du moyeu de la roue arrière, ledit changement de vitesse étant relié par câble (C) à un organe de commande du type à levier (10) notamment en étant conformé et agencé pour coopérer avec des moyens de commande, de réglage et d'indexation (9-8-6), aptes à assurer dans un premier temps, la mise sous tension ou détension du câble à chaque inversion du sens du levier et, dans un deuxième temps, agir sur ledit câble pour le déplacement transversal du guide-chaîne pour le passage ou la sélection d'une ou plusieurs vitesses, l'organe de commande (10) comprenant un secteur de base (6) indexé angulairement sur un organe support (5) conformé pour le montage de l'ensemble sur une partie appropriée du cycle, un axe pivot (7) étant indexé en combinaison avec le secteur (6) agencé pour le passage du câble et faire office de support à l'organe de protection dudit câble caractérisé en ce que sur une portée cylindrique de l'axe pivot (7) sont montés en superposition et à libre rotation, une plaque circulaire (8) d'indexation et de réglage et un tambour d'entraînement (9) auquel est relié le câble de commande (C), ladite plaque et ledit tambour étant soumis à une force de friction, le levier de manœuvre (10) étant monté libre en rotation, sans friction, sur l'axe pivot (7) en étant conformé et agencé pour coopérer avec le tambour (9) et la plaque (8) en vue, dans un premier temps, de leur entraînement concomitant pour la mise sous tension ou détension du câble à chaque inversion du sens du levier et, dans un deuxième temps, pour l'entraînement du tambour seul en vue de la commande du câble pour le passage ou la sélection d'une vitesse.

2. Dispositif selon la revendication 1, caractérisé en ce que le levier est du type à impulsion en étant agencé pour être déplacé angulairement avec la même amplitude limitée dans un sens ou dans l'autre à partir d'une position neutre jusqu'à une position limitée à l'encontre d'un moyen élastique de rappel.

3. Dispositif selon la revendication 1, caractérisé en ce que la plaque circulaire (8) présente à sa périphérie en débordement de sa face de dessous, un ergot (8a) coopérant, après montage de la plaque (8) sur l'axe (7) avec une encoche (6b) formée à partir du bord du secteur (6) ; ladite plaque (8) présente en débordement de sa face de dessus, notamment en alignement axial avec l'ergot (8a), une languette équerrée (8b) prolongée en hauteur par un bossage médian (8c), un secteur vertical (8d) étant formé en saillie de la face de dessus de la languette, ledit secteur présentant une ouverture étagée (8d1).

4. Dispositif selon la revendication 3, caractérisé en ce que le diamètre du tambour (9) est déterminé de façon à pouvoir tourner entre les parois de la languette (8b) et du secteur (8d) avec le jeu fonctionnel nécessaire, une partie de la périphérie du tambour présentant deux rangées superposées de dentures (9a) et (9b) susceptibles de coopérer respectivement avec deux cliquets superposés (11) et (12) montés dans un support que présente une partie du levier (10) ; après montage du tambour (9) sur l'axe pivot (7), en superposition de la plaque (8), les dentures (9a) et (9b) sont convenablement disposées en regard de l'ouverture étagée (8d1) du masque.

5. Dispositif selon la revendication 4, caractérisé en ce que les deux dentures (9a) et (9b) sont de pas opposé pour autoriser l'entraînement dans un sens ou dans l'autre du tambour (9) sous l'effet d'une impulsion angulaire exercée sur le levier (10), les parties actives profilées (11a) et (12a) des cliquets étant disposées inversement l'une par rapport à l'autre en combinaison avec le profil correspondant desdites dentures.

6. Dispositif selon la revendication 2, caractérisé en ce que le levier (10) est monté tournant en combinaison avec une vis axiale (14) vissée dans l'axe pivot (7) pour agir en pression au moyen d'organes de friction (15-18), sur l'ensemble tambour (9)-plaque (8), une partie dudit levier coopérant avec un ressort de rappel (16) dont les brins libres d'extrémité (16a) et (16b) après entrecroisement en égard à un ergot (17) formé en débordement de la face de dessous dudit levier, sont disposés parallèlement et en butée de part et d'autre du bossage (8c) que présente la languette équerrée de la plaque (8).

7. Dispositif selon la revendication 6 caractérisé en ce que le levier (10), au niveau de sa partie d'articulation, présente deux pattes espacée (10a) et (10b) recourbées vers le bas, lesdites pattes, après montage du levier, étant positionnées de part et d'autre de la languette verticale (8b), d'une manière équidistante selon une valeur ($\alpha$) en position neutre du levier constamment rappelé dans cette position par le ressort (16), les deux pattes équerrées faisant office de butée de limitation du déplacement angulaire dans les deux sens, du levier (10), la valeur angulaire ($\alpha$) correspondant à l'amplitude nécessaire exercée par le levier pour changer une vitesse.

8. Dispositif selon la revendication 5, caractérisé en ce que le nombre de dents de chacune des dentures (9a) et (9b) du tambour est identique et fonction du nombre de pignons de la roue libre de sorte que si (n) est le nombre de pignons de la roue libre, le nombre de dents sera égal à (n — 1).

9. Dispositif selon les revendications 2 et 3 ensemble, caractérisé en ce que l'ergot (8a) de la plaque (8), après entraînement simultané du tambour (9) et de ladite plaque par le levier (10) vient en butée dans l'encoche (6b) du secteur (6) selon un déplacement angulaire limité ($\beta$) qui correspond à la tension ou détension du câble suivant que l'on monte ou que l'on descend les vitesses.

10. Dispositif de commande, de présélection et d'indexation des changements de vitesse pour cycles et véhicules similaires du type de ceux conformés pour déplacer transversalement un guide-chaîne par rapport aux pignons étagés solidaires du moyeu de la roue arrière, ledit changement de vitesse étant relié par câble (C) à un organe de commande du type à levier (31) notamment en étant conformé et agencé pour coopérer avec des moyens de commande, de réglage et d'indexation (30-6), aptes à assurer dans un premier temps, la mise sous tension ou détension du câble à chaque inversion du sens du levier et, dans un deuxième temps, à agir sur ledit câble pour le déplacement transversal du guide-chaîne pour le passage ou la sélection d'une ou plusieurs vitesses, l'organe de commande (31) comprenant un secteur de base (6) indexé angulairement sur un organe support (5) conformé pour le montage de l'ensemble sur une partie appropriée du cycle, un axe pivot (7) étant indexé en combinaison avec le secteur (6) agencé pour le passage du câble et faire office de support à l'organe de protection dudit câble, caractérisé en ce que sur une portée cylindrique de l'axe pivot (7) est monté, libre en rotation, un secteur profilé (30) présentant des agencements conformés pour venir en position de butée sur des parties correspondantes du secteur fixe de base (6) selon deux positions angulaires extrêmes dudit secteur mobile (30) qui est en outre agencé avec des moyens coopérant avec des moyens complémentaires du levier (31) pour, dans un premier temps, être entraîné concomitamment avec le levier jusqu'à l'une des positions de butée correspondant à la tension ou détension du câble de commande selon le sens de pivotement du levier, puis, dans un deuxième temps, autoriser le déplacement du levier seul selon des positions préétablies correspondant à un nombre de vitesses sélectionnées, ledit secteur mobile (30) demeurant en position fixe de butée.

11. Dispositif selon la revendication 10, caractérisé en ce que le levier de manœuvre (31) est monté libre en rotation sur une portée cylindrique d'un axe entretoise (32) qui, en combinaison avec les moyens de serrage et de fixation dudit levier (31) avec l'axe pivot (7), autorise par friction, sous un effet de déplacement angulaire du levier et à chaque inversion du sens de pivotement de ce dernier, le déplacement concomitant du secteur mobile (30) jusqu'à l'une des deux positions de butée.

12. Dispositif selon la revendication 10, caractérisé en ce que le secteur mobile (30) concentriquement à son alésage (30a) présente une série de profils en creux et en relief sous forme de dents (30b) régulièrement réparties sur une circonférence en étant équidistantes, les parties en creux et en relief de la denture (30b) coopérant respectivement avec les parties en relief et en creux d'une denture complémentaire (31a) que présente la face interne du levier (31) concentriquement à son alésage, le profil en section des parties en creux et en relief desdites dentures étant déterminé de sorte que le secteur mobile (30) et le levier (31) ont un mouvement relatif l'un par rapport à l'autre tout en autorisant une indexation lorsque les parties en creux de l'une des dentures correspondant aux parties en relief de l'autre denture.

13. Dispositif selon la revendication 11, caractérisé en ce que l'axe entretoise (32) présente à sa base, un épaulement circulaire (32b) qui prend appui sur une portée annulaire (30c) du secteur mobile (30) résultant de la différence de diamètre entre l'alésage de la denture circulaire (30b) et l'alésage (30a) dudit secteur, ledit axe entretoise étant creux pour le passage de la vis de fixation (14) du levier (31), ladite vis coopérant en appui avec une rondelle (33) et une plaquette (37).

14. Dispositif selon la revendication 10, caractérisé en ce que le secteur mobile (30) présente dans un même plan horizontal, en débordement de son bord circulaire et en débordement du bord circulaire du secteur fixe (6), deux parties profilées (30d) et (30e) qui délimitent en combinaison, une échancrure en arc de cercle (30f) pour le déplacement limité du levier (31) qui présente à cet effet un ergot de butée (31c).

15. Dispositif selon la revendication 14, caractérisé en ce que l'angle au centre (θ) de l'échancrure correspond au débattement angulaire maximum du levier (31) fonction du nombre de vitesses.

16. Dispositif selon la revendication 14, caractérisé en ce que la partie profilée (30d) du secteur (30) présente en débordement de la face de dessous du secteur (30), un bossage (30d1) susceptible d'être mis en butée avec un bord rectiligne (6d) du secteur fixe (6), l'autre partie profilée (30e) étant prolongée par une branche (30e1) qui présente en bout, à l'opposé de l'échancrure (30f), un bossage équerré (30e2) susceptible de coopérer en butée avec une branche équerrée (6e) d'une languette verticale (6f) de secteur (6), lesdits bossages (30d1) et (30e2) étant convenablement décalés angulairement pour autoriser une latitude de pivotement limité (δ) du secteur (30) par rapport au secteur fixe (6).

17. Dispositif selon la revendication 16, caractérisé en ce que l'une des deux butées (30d1) ou (30e2) est réglable pour faire varier l'angle (δ).

18. Dispositif selon la revendication 10, caractérisé en ce qu'une partie appropriée du levier présente un index coopérant avec des repères marqués sur une partie correspondante en regard du secteur mobile (30).

19. Dispositif selon l'une quelconque des revendications 1 et 10 dans lequel le changement de vitesse est du type à parallélogramme déformable comprenant pour l'essentiel une chape support supérieure (1) et une chape support inférieure (2) reliées à articulation par deux biellettes (3) et (4) pour le déplacement transversal d'un guide-chaîne que présente la chape inférieure (2), caractérisé en ce qu'une partie de la chape support supérieure (1) reçoit un ressort de torsion (20) dont les deux brins d'extrémité (20a) et (20b) sont entrecroisés à partir d'un maneton (21) pour s'étendre parallèlement de part et d'autre d'un pion (25) que présente notamment une partie de la chape support inférieure (2), ledit maneton (21) étant solidaire d'une partie conformée pour être déplacée angulairement sous l'effet de traction du câble de commande (C) et rappelée en position par un organe élastique pour entraîner concomitamment, dans un sens ou dans l'autre, le support inférieur (2) en combinaison avec le ressort (20).

20. Dispositif selon la revendication 19, caractérisé en ce que le maneton (21) est disposé facialement en débordement d'un tambour (22) monté rotatif sur un axe (23) solidaire de la chape (1) en étant assujetti à un ressort de rappel (24), ledit tambour et le pion (25) étant disposés entre les deux biellettes (3) et (4) du parallélogramme tandis que le ressort (20) est enroulé sur un prolongement de l'axe (23) le câble de commande (C), enroulé sur le tambour (9) du levier de manœuvre (10), est relié fixement au tambour (22) du dérailleur.

21. Dispositif selon la revendication 20 caractérisé en ce qu'en position neutre du levier de manœuvre (10) ou (31) et après passage d'une ou plusieurs vitesses, le ressort (20) est en position d'équilibre de sorte que les deux brins d'extrémités (20a) et (20b) n'exercent et ne sont soumis à aucune action en égard au pion (25), tandis qu'après avoir exercé une ou plusieurs impulsions sur le levier (10) pour la sélection à l'arrêt, c'est-à-dire avant pédalage, d'une ou plusieurs vitesses, le ressort (20) est déformé, l'un des brins (20a) ou (20b) (selon le sens) est soumis à la force de réaction résultante de son contact avec le pion (25), ledit ressort (20) retrouvant sa position d'équilibre au fur et à mesure du pédalage.

22. Dispositif selon la revendication 21, caractérisé en ce que le pion (25) est assujetti à des moyens conformés pour permettre son réglage en translation par rapport à la denture afin de mettre en alignement le changement de vitesse sur la première denture.

23. Dispositif selon la revendication 22, caractérisé en ce que le pion (25) est monté dans une lumière oblongue (26a) formée dans une patte (26) que présente directement, ou d'une manière rapportée, la chape support inférieure (2), ledit pion étant traversé par une vis (27) bloquée en translation, des moyens (28) permettant d'agir en rotation sur la vis en vue du déplacement du pion.

24. Dispositif selon la revendication 22, caractérisé en ce que le maneton (21) et le pion (25) sont de même diamètre, les deux brins (20a) et (20b) du ressort (20) étant en contact à la fois sur ledit maneton et ledit pion de sorte qu'il n'apparaît aucun jeu au niveau de l'ensemble du parallélogramme.

25. Dispositif selon la revendication 22, caractérisé en ce que le diamètre du maneton (21) est supérieur à celui du pion (25), les deux brins (20a) et (20b) se trouvant seulement en contact avec ledit maneton (21) pour conférer un jeu latéral à l'ensemble du parallélogramme.

26. Dispositif selon les revendications 1 et 19 ensemble, caractérisé en ce que la plaque (8) présente une partie appropriée (8e) pour le marquage des chiffres correspondant au nombre de vitesses tandis que le tambour (9) est équipé d'un index (9d) se présentant en regard de ces chiffres.

## Claims

1. Control, pre-selection and indexing device for the change speed gears of cycles and like vehicles, of the type which is designed to shift transversely a chain-guide relative to the stepped tooth wheels secured against the hub of the rear wheel of the bicycle or like vehicle, said change speed gear being connected by a cable (C) to a driving organ of the lever type (10) more particularly, formed and arranged for co-operation with control, adjustment and indexing means (9-8-6) adapted to ensure in a first time the tensioning or the release of the cable at each reversal of the direction of the lever, and in a second time to actuate said cable for the transverse shifting of the chain-guide for the passage or the selection of one or more speed gearings, the driving organ (10) including a basic sector (6) which is indexed angularly on a supporting organ (5) arranged for the mounting of the asembly on a convenient part of the cycle, a pivot stud (7) being indexed in combination with the sector (6) arranged for the passage of the cable and for supporting the protection organ of said cable ; the device being characterized in that on a cylindrical bearing face of the pivot stud (7) are mounted in superimposition and for free rotation a circular indexing and adjusting plate (8) and a driving barrel (9) to which the driving cable (C) is connected, said plate and said barrel being subjected to a frictional force, the actuating lever (10) being mounted for free rotation, without friction, on the pivot stud (7) while being formed and arranged for co-operation with the barrel (9) and the plate (8) for the purpose in a first time of the concomitant drive of said barrel and said plate for tensioning or releasing the cable at each reversal of the direction of the lever, and in a second time of the drive of the barrel only for the control of the cable in order to shift or to select a speed.

2. Device as claimed in Claim 1, characterized in that the lever is of the pulse type and is adapted to be shifted angularly with the same magnitude limited in either direction from a neutral position up to a position limited against an elastic return means.

3. Device as claimed in Claim 1, characterized in that the circular plate (8) has on the periphery thereof and in projection from the underside thereof a spigot (8a) co-operating, after the mounting of the plate (8) on the stud (7), with a notch (6b) formed from the edge of the sector (6), said plate (8) having in projection from the upper face thereof, more particularly in axial alignment with the spigot (8a), a squared tongue (8b) extended upwardly by a medial boss (8c), a vertical sector (8d) being formed in projection from the upper side of the tongue, said sector being provided with a stepped opening (8d1).

4. Device as claimed in Claim 3, characterized in that the diameter of the barrel (9) is predetermined so that this barrel will be capable of being rotated between the walls of the tongue (8b) and of the sector (8d) with the necessary functional play, a portion of the periphery of the barrel being provided with two superimposed rows of teeth (9a) and (9b) for co-operation respectively with two superimposed catches (11) and (12) mounted in a support provided on a portion of the lever (10), the teetj (9a) and (9b), after mounting of the barrel (9) on the pivot stud (7) in superimposition relative to the plate (8), being conveniently disposed opposite the stepped opening (8d1) of the guard.

5. Device as claimed in Claim 4, characterized in that the two rows of teeth (9a) and (9b) have an opposed pitch to permit the barrel (9) to be driven in either direction under the action of an angular pulse exerted on the lever (10), the contoured active portions (11a) and (12a) of the catches being disposed inversely to one another in combination with the corresponding contour of said teeth.

6. Device as claimed in Claim 5, characterized in that the lever (10) is mounted for rotation in combination with an axial screw (14) threaded into the pivot stud (7) in order to press down by means of frictional organs (15-18) on the barrel (9)-plate (8) assembly, a portion of said lever co-operating with a return spring (16) the free end stems (16a) and (16b) of which, after interlacing relative to a spigot (17) formed in projection from the underside of said lever, are disposed parallel and in abutment on either side of the boss (8c) with which the squared tongue of the plate (8) is provided.

7. Device as claimed in Claim 6, characterized in that the lever (10), at the level of the hinged part thereof, is provided with two spaced lugs (10a) and (10b) which are bent downwardly, said lugs, after the mounting of the lever, being positioned on either side of the vertical tongue (8b), in an equidistant manner according to a value ($\alpha$) in the neutral position of the lever which is steadily returned in this position by the spring (16), the two squared lugs acting as limiting stops of the angular shifting of the lever (10) in both directions, the angular value ($\alpha$) corresponding to the necessary magnitude developed by the lever for a speed gear change.

8. Device as claimed in Claim 5, characterized in that the number of teeth of each one of the rows of teeth (9a) and (9b) of the barrel is identical and in accordance with the number of sprockets of the free wheel, so that with (n) being the number of the sprockets of the free wheel, the number of teeth with be equal to (n — 1).

9. Device as claimed in Claims 2 and 3 together, characterized in that the spigot (8a) of the plate (8), after the simultaneous driving of the barrel (9) and of said plate by the lever (10), is moved to be abutted within the notch (6b) of the sector (6) in accordance with a limited angular shifting ($\beta$) corresponding to the tensioning or the release of the cable as the change speed gear is changed respectively to higher or lower speed.

10. Control, pre-selection and indexing device for the change speed gears of cycles and like vehicles, of the type which is designed to shift transversely a chain-guide relative to the stepped tooth wheels secured against the hub of the rear wheel of the bicycle or like vehicle, said change speed gear being connected by a cable (C) to a driving organ of the lever type (31) more particularly formed and arranged for cooperation with control, adjustment and indexing means (30-6), adapted to ensure in a first time the tensioning or the release of the cable at each reversal of the direction of the lever, and in a second time to actuate said cable for the transverse shifting of the chain-guide for the passage or the selection of one or more speed gearings, the driving organ (31) including a basic sector (6) which is indexed angularly on a supporting organ (5) arranged for the mounting of the assembly on a convenient part of the cycle, a pivot stud (7) being indexed in combination with the sector (6) arranged for the passage of the cable and for supporting the protection organ of said cable ; the device being characterized in that on a cylindrical bearing face of the pivot stud (7) there is mounted for free rotation a contoured sector (30) provided with arrangements adapted to come in an abutting position on corresponding portions of the stationary basic sector (6) in accordance with two extremal angular positions of said movable sector (30), which is moreover provided with means cooperating with complementary means of the lever (31) in order, firstly, to be driven concomitantly with the lever up to one of the abutment positions corresponding to the tensioning or to the release of the control cable in accordance with the swivelling direction of the lever, and secondly, to permit the shifting of the lever only in accordance with pre-established positions corresponding to a number of selected speeds, said movable sector (30) remaining in a fixed position of abutment.

11. Device as claimed in Claim 10, characterized in that the control lever (31) is mounted for free rotation on a cylindrical bearing face of a bracing pin (32) which in combination with the means for clamping and fastening said lever (31) with the pivot stud (7), permits frictionally, under an action of angular shifting of the lever and at each reversal of the swivelling direction of the latter, the concomitant shifting of the movable sector (31) up to one of the two positions of abutment.

12. Device as claimed in Claim 10, characterized in that the movable sector (30) is provided concentrically to the bore (30a) thereof with a number of hollow and raised contours in the form of teeth (30b) regularly distributed along a circumference while being equidistant, the hollow and raised portions of the row of teeth (30b) cooperating respectively with the raised and hollow portions of a complementary row of teeth (31a) provided on the inside face of the lever (31) concentrically to the bore thereof, the sectional contour of the hollow and raised portions being such that the movable sector (30) and the lever (31) will have a motion relative to one another while permitting an indexing when the hollow portions of one of the rows of teeth correspond to the raised portions of the other row of teeth.

13. Device as claimed in Claim 11, characterized in that the bracing pin (32) is provided at the bottom thereof with a circular shoulder (32b) which is abutted on a ring-like bearing face (30c) of the movable sector (30) resulting from the difference in diameter between the bore of the circular row of teeth (30b) and the bore (30a) of said sector, said bracing pin being hollow for the passage of the fastening screw (14) of the lever (31), said screw co-operating in abutment with a washer (33) and a small plate (37).

14. Device as claimed in Claim 10, characterized in that the movable sector (30) is provided in the same horizontal plane, in projection from the circular edge thereof and in projection from the circular edge of the fixed sector (6), with two contoured portions (30d) and (30e) defining in combination an arched cut-out (30f) for the limited shifting of the lever (31) which has for this purpose a spigot of abutment (31c).

15. Device as claimed in Claim 14, characterized in that the angle in the centre ($\theta$) of the cut-out corresponds to the maximal angular clearance of the lever (31) in accordance with the number of the sprockets of the change speed gear.

16. Device as claimed in Claim 14, characterized in that the contoured portion (30d) of the sector (30) is provided in projection from the underside of the sector (30) with a boss (30d1) which can be abutted against a rectilinear edge (6d) of the fixed sector (6), the other contoured portion (30e) being extended by a leg (30e1) having at the end thereof, opposite the cut-out (30f), a squared boss (30e2) capable of co-operating in abutment with a squared leg (6e) of a vertical tongue (6f) of the sector (6), said bosses (30d1) and (30e2) being conveniently offset angularly to permit a limited free swivelling (δ) of the sector (30) relative to the fixed sector (6).

17. Device as claimed in Claim 16, characterized in that one of the two stops (30d1) or (30d2) is adjustable so that the angle (δ) may be varied.

18. Device as claimed in Claim 10, characterized in that a convenient portion of the lever is provided with an index co-operating with reference marks on a corresponding portion opposite the movable sector (30).

19. Device as claimed in any one of Claims 1 and 10, wherein the change speed gear is of the type with deformable parallelogram, comprised essentially of an upper supporting yoke (1) and a lower supporting yoke (2) connected hingedly by two linking rods (3) and (4) for the transverse shifting of a chain-guide disposed on the lower yoke (2), characterized in that a portion of the upper supporting yoke (1) accommodates a torsion spring (20) the two end stems (20a) and (20b) of which are interlaced from a crankpin (21) to be extended in a parallel direction on either side of a stub (25) provided more particularly on a portion of the lower supporting yoke (2), said crankpin being made fast with a part adapted to be shifted angularly under the pulling action of the control cable (C) and to be returned in position by an elastic organ in order to drive concomitantly in either direction the lower support (2) in combination with the spring (20).

20. Device as claimed in Claim 19, characterized in that the crankpin (21) is located facially in projection from a barrel (22) mounted for rotation on a stud (23) made fast with the yoke (1) while being controlled by a return spring (24), said barrel and the stub (25) being disposed between the two linking rods (3) and (4) of the parallelogram while the spring (20) is rolled up on an extension of the stud (23), the control cable (C), rolled up on the barrel (9) of the actuating lever (10), being connected fixedly to the barrel (22) of the gear shifting device.

21. Device as claimed in Claim 20, characterized in that in the neutral position of the actuating lever (10) or (31) and after the shifting of one or more speed sprockets, the spring (20) is in a position of balance, so that the two end stems (20a) and (20b) will not act in any way and will not be subjected to any action relative to the stub (25), while after giving one or more impulses on the lever (10) for the selection at a standstill, i. e. prior to pedalling, of one or more speeds, the spring (20) is distorted, one of the stems (20a) or (20b) (in accordance with the direction) is subjected to the force of reaction resulting from the contact thereof with the stub (25), said spring resuming its position of balance as the user is pedalling.

22. Device as claimed in Claim 21, characterized in that the stub (25) is controlled by means adapted to permit the adjustment in translation thereof relative to the teeth in order to align the change speed gear in accordance with the first row teeth.

23. Device as claimed in Claim 22, characterized in that the stub (25) is mounted in an oblong aperture (26a) formed in a lug (26) provided directly or in an inserted manner in the lower supporting yoke (2), a screw (27) locked in translation being passed through said stub, means (28) permitting to actuate the screw for rotation in order to shift the stub.

24. Device as claimed in Claim 22, characterized in that the crankpin (21) and the stub (25) have the same diameter, the two stems (20a) and (20b) of the spring (20) being in contact at a time with said crankpin and said stub, so that there will be no play whatever at the level of the parallelogramm assembly.

25. Device as claimed in Claim 22, characterized in that the diameter of the crankpin (21) is larger than the diameter of the stub (25), the two stems (20a) and (20b) being in contact with said crankpin (21) only in order to allow for a lateral play for the parallelogram assembly.

26. Device as claimed in Claims 1 and 19 together, characterized in that the plate (8) is provided with an adequate portion (8e) for making the reference numbers corresponding to the number of the speed gear sprockets, while the barrel (9) is provided with an index (9d) facing said reference numbers.

**Patentansprüche**

1. Steuerungs-, Vorwählens- und Teilungsvorrichtung für die Gangschaltungen der Fahrräder oder ähnlichen Fahrzeuge, in der für die Querverschiebung einer Kettenführung mit Bezug auf die gestaffelten, der Hinterradsnabe zugeordneten Zahnräder vorgesehenen Ausführung, wobei die besagte Gangschaltung durch ein Kabel (C) mit einem insbesondere hebelartigen Steuerugsorgan (10) verbunden ist, das zum Mitwirken mit Steuerungs-, Verstellungs- und Teilungsmitteln (9-8-6) ausgebildet und eingerichtet ist, die dazu geeignet sind, in einer ersten Zeit die Spannung oder die Entspannung des Kabels bei jeder Umschaltung der Richtung des Hebels zu bewirken, und in einer zweiten Zeit das besagte Kabel für die Querverschiebung der Kettenführung für den Übergang oder das Auswählen einer oder mehrerer Schaltgänge zu betätigen, wobei das Steuerungsorgan (10) einen auf einem für das Montieren der Gesamtvorrichtung auf einen geeigneten Teil des Fahrrads ausgebildeten Tragorgan (5) winklig geteilten Grundsektor (6) aufweist, mit einer in Kombination mit dem Sektor (6) geteilten Schwenkachse (7), die für den Durchgang des Kabels und als Träger des Schutzorgans des genannten Kabels ausgebildet ist, dadurch gekennzeichnet, dass eine kreisförmige Teilungs- und Verstellungsplatte (8) und eine mit dem Steuerungskabel (C) verbundene Antriebtrommel (9) aufeinanderliegend und frei drehbar auf einer zylindrischen Lauffläche der Schwenkachse (7) montiert sind, wobei die besagte Platte und die besagte Trommel unter dem Einfluss einer Reibungskraft stehen, und der Betätigungshebel (10) frei drehbar und reibungslos auf der Schwenkachse (7) montiert wird, indem Dieser Hebel zum Mitwirkem mit der Trommel (9) und der Platte (8) ausgebildet und eingerichtet ist, um in einer ersten Zeit den gemeinsamen Antrieb dieser Trommel und dieser Platte für das Spannen oder das Entspannen des Kabels bei jeder Umschaltung der Richtung des Hebels, und in einer zweiten Zeit nur den Antrieb der Trommel allein für die Steuerung des Kabels für den Durchgang des Kabels oder das Auswählen eines Schaltgangs zu bewirken.

2. Vorrichtung nach Anspruch 1, dadurch gekennzeichnet, dass der Hebel ein impulsartiger Hebel und zum winkligen Verschieben mit derselben beschränkten Bewegungsgrösse in beiden Richtungen von einer Nullstellung ab bis zu einer beschränkten Stellung entgegen der Wirkung eines federnden Rückführungsmittels ausgebildet ist.

3. Vorrichtung nach Anspruch 1, dadurch gekennzeichnet, dass die kreisförmige Platte (8) auf deren Umfang und aus deren Unterseite hinausragend einen Anschlagstift (8a) aufweist, der nach dem Montieren der Platte (8) auf der Achse (7) mit einem von dem Rand des Sektors (6) ab gebildeten Einschnitt (6b) zusammenwirkt, wobei die genannte Platte (8), hinausragend aus deren Oberseite und insbesondere in axialer Richtlinie mit dem Anschlagstift (8a) eine in der Höhe durch eine mittige Nase (8c) verlängerte, rechtwinklige Passfeder (8b) aufweist, mit einem von der Oberfläche ab der Passfeder vorspringend gebildeten Vertikalsektor (8d), der eine gestaffelte Öffnung (8d1) aufweist.

4. Vorrichtung nach Anspruch 3, dadurch gekennzeichnet, dass der Durchmesser der Trommel (9) so festgesetzt ist, dass Drehbewegungen dieser Trommel zwischen den Wandungen der Passfeder (8b) und des Sektors (8d) mit dem erforderlichen Spielraum ermöglicht werden, wobei ein Teil des Umfangs der Trommel zwei aufeinanderliegenden Reihen von Verzahnungen (9a) und (9b) aufweist, die mit zwei in einem auf einem Treil des Hebels (10) vorgesehenen Träger montierten, aufeinanderliegenden Klinken (11) und (12) beziehungsweise mitwirken können, und wobei die Verzahnungen (9a) und (9b), nach dem Montieren der Trommel (9) auf der Schwenkachse (7) in aufeinanderliegenden Stellung zu der Platte (8) zweckmässig der gestaffelten Offnung (8d1) der Abdeckung gegenüberstehend angeordnet werden.

5. Vorrichtung nach Anspruch 4, dadurch gekennzeichnet, dass die zwei Verzahnungen (9a) und (9b) mit entgegengesetzter Gewindsteigung vorgesehen sind, um die Mitnahme der Trommel (9) in beiden Richtungen unter der Wirkung eines auf den Hebel (10) ausgeübten winkligen Impulses zu gestatten, wobei die profilierten, wirkenden Teile (11a) und (12a) der Klinden umgekehrt zueinander und in Kombination mit dem entsprechenden Profil der besagten Verzahnungen angeordnet sind.

6. Vorrichtung nach Anspruch 2, dadurch gekennzeichnet, dass der Hebel (10) drehbar in Kombination mit einer in der Schwenkachse (7) eingeschraubten Achsialschraube (14) montiert ist, um mittels Reibungsorgane (15-18) druckschlüssig auf den aus der Trommel (9) und der Platte (8) bestehenden Komplex einzuwirken, wobei ein Teil des genannten Hebels mit einer Rückführungsfeder (16) zusammenwirkt, deren freie Endtrumm (16a) und (16b), nach Durchkreuzen mit Bezug auf einen aus der Unterseite des besagten Hebels hinausragend begildeten Anschlagstift (17), parallel und im Anschlag beiderseits der auf der rechtwinkligen Passfeder (8c) vorgesehenen Nase (8c) angeordnet sind.

7. Vorrichtung nach Anspruch 6, dadurch gekennzeichnet, dass der Hebel (10), an der Höhe dessen Gelenkungsteils, zwei voneinander abstehenden, nach únten gebogenen Laschen (10a) und (10b) aufweist, die nach dem Montieren des Hebels beiderseitig der senkrechten Passfeder (8b) mit gleichem Abstand gemäss einem Wert (α) in der senkrechten Nullstellung des beständig auf diese Stellung durch die Feder (16) rückgeführten Hebels eingestellt werden, wobei die zwei rechtwinkligen Laschen als Anschlag für die Begrenzeung der Winkelverschiebung in beiden Richtungen des Hebels (10) wirken, und der Winkelwert (α) der Hebelverschiebungstragweite entspricht, die für das Wechseln eines Schaltgangs erforderlich ist.

8. Vorrichtung nach Anspruch 5, dadurch gekennzeichnet, dass die Zahl der Zähne jeder einen der Verzahnungen (9a) und (9b) der Trommel die gleiche ist und von der Zahl der Freilaufzahnräder abhängig vorgesehen wird, sodass bei einer (n)-Zahl von Freilaufzahnrädern die Zahl der Zähne einem Wert von (n — 1) entspricht.

9. Vorrichtung nach den Ansprüchen 2 und 3 zusammen, dadurch gekennzeichnet, dass der Anschlagstift (8a) der Platte (8), nach gleichzeitiger Mitnahme der Trommel (9) und der genannten Platte durch den Hebel (10), zum Anschlag in den Einschnitt (6b) des Sektors (6) gemäss einer begrenzten Winkelverschiebung (β) kommt, die dem Spannen oder dem Entspannen des Kabels je nach der Erhöhung oder der Verminderung der Schaltgänge entspricht.

10. Steuerungs-, Vorwählens- und Teilungsvorrichtung für die Gangschaltungen der Fahrräder oder ähnlichen Fahrzeuge, in der für die Querverschiebung einer Kettenführung mit Bezug auf die gestaffelten, der Hinterradnabe zugeordneten Zahnräder vorgesehenen Ausführung, wobei die besagte Gangschaltung durch ein Kabel (C) mit einem insbesondere hebelartigen Steuerungsorgan (31) verbunden ist, das zum Mitwirken mit Steuerungs-, Verstellungs- und Teilungsmitteln (30-6) ausgebildet und eingerichtet wird, die dazu geeignet sind, in einer ersten Zeit das Spannen oder das Entspannen des Kabels bei jeder Umschaltung der Richtung des Hebels zu bewirken, und in einer zweiten Zeit das besagte Kabel für die Querverschiebung der Kettenführung für den Übergang oder das Auswählen eines oder mehrerer Schaltgänge zu betätigen, wobei das Steuerungsorgan (31) einen auf einem für das Montieren der Gesamtvorrichtung auf einem geeigneten Teil des Fahrrads ausgebildeten Tragorgan (5) winklig geteilten Grundsektor (6) aufweist, mit einer in Kombination mit dem Sektor (6) geteilten Schwenkachse (7), die für den Durchgang des Kabels und als Träger des Schutzorgans des genannten Kabels ausgebildet ist, dadurch gekennzeichnet, dass auf einer zylindrischen Lauffläche der Schwenkachse (7) ein profilierter Sektor (30) frei drehbar montiert wird, der die geeigneten Einrichtungen aufweist, um in Anschlagstellung auf entsprechende Teile des feststehenden Grundsektors (6) gemäss zwei Endwinkelstellungen des genannten beweglichen Sektors (30) zu gelangen, der darüber hinaus mit Mitteln zum Zusammenwirken mit zusätzlichen Mitteln des Hebels (31) ausgestattet ist, um in einer ersten Zeit gemeinsam mit dem Hebel bis zu der einen der dem Spannen oder dem Entspannen des Steuerhebels je nach der Verschwenkenrichtung des Hebels entsprechenden Stellungen angetrieben zu werden, und dann in einer zweiten Zeit die Bewegung des Hebels allein je nach vorbestimmten Stellungen zu gestatten, die einer Zahl ausgewählter Schaltgänge entsprechen, wobei der genannte bewegliche Sektor (30) in feststehender Anschlagstellung verbleibt.

11. Vorrichtung nach Anspruch 10, dadurch gekennzeichnet, dass der Betätigungshebel (31) frei drehbar auf einer zylindrischen Lauffläche einer Zwischenträgerachse (32) montiert ist, die in Kombination mit den Mitteln zum Einspannen und zur Befestigung des besagten Hebels (31) auf der Schwenkachse (7) reibungschlüssig unter der Wirkung der winkligen Verschiebung des Hebels und bei jeder Umschaltung der Schwenrichtung dieses Hebels die gemeinsame Verschiebung des beweglichen Sektors (30) bis zu der einen der zwei Anschlagstellungen gestattet.

12. Vorrichtung nach Anspruch 10, dadurch gekennzeichnet, dass der bewegliche Sektor (30) konzentrisch zu dessen Bohrung (30a) eine Reihe von zahnenförmigen, auf einem Umkreis mit gleichem Abstand voneinander regelmässig verteilten ausgehöhlten und erhöhten Profilierstücken (30b) aufweist, wobei die ausgehöhlten und erhöhten Teile dieser Verzahnung (30b) mit den erhöhten und ausgehöhlten Teilen einer ergänzenden Verzahnung (31a) beziehungsweise zusammenarbeiten, die auf einer Innenfläche des Hebels (31) konzentrisch zu dessen Bohrung vorgesehen sind, indem der Querschnittprofil der ausgehöhlten und erhöhten Teile der besagten Verzahnungen so bestimmt wird, dass damit der bewegliche Sektor (30) und der Hebel (31) sich zueinander bewegen können und gleichzeitig eine Teilung ermöglichen, wenn die ausgehöhlten Teile der einen der Verzahnungen den erhöhten Teilen der anderen Verzahnung entsprechen.

13. Vorrichtung nach Anspruch 11, dadurch gekennzeichnet, dass die Zwischenträgerachse (32) an deren Unterteil eine kreisförmige Kröpfung (32b) aufweist, die sich auf eine kreisförmige Lauffläche (30c) des beweglichen Sektors (30) abstützt, die sich aus dem Durchmesserunterschied zwischen der Bohrung der kreisförmigen Verzahnung (30b) und der Bohrung (30a) des besagten Sektors ergibt, wobei die genannte Zwischenträgerachse für das Durchqueren der Befestigungsschraube (14) des Hebels (31) ausgehöhlt ist, und die besagte Schraube mit einer Scheibe (33) und einem Plättchen (37) abstutzungsweise zusammenarbeitet.

14. Vorrichtung nach Anspruch 10, dadurch gekennzeichnet, dass der bewegliche Sektor (30) in derselben waagrechten Ebene und hinausragend aus dessen kreisförmigem Rand sowie hinausragend aus dem kreisförmigen Rand des feststehenden Sektors (6) zwei Profilierteile (30d) und (30e) aufweist, die in Kombination für die begrenzte Verschiebung des Hebels (31) einen bogenförmigen Ausschnitt (30f) umgrenzen, der zu diesem Zweck einen Anschlagstift (31c) aufweist.

15. Vorrichtung nach Anspruch 14, dadurch gekennzeichnet, dass der Winkel in der Mitte (8) des Ausschnitts dem höchsten Winkelfederweg des Hebels (31) je nach der Zahl der Schaltgänge entspricht.

16. Vorrichtung nach Anspruch 14, dadurch gekennzeichnet, dass der Profilierteil (30d) des Sektors (30), hinausragend aus der Unterseite des Sektors (30), eine Nase (30d1) aufweist, die zum Anschlag mit dem geradelinigen Rand (6d) des feststehenden Sektors (6) gelangen kann ; dass der andere Profilierteil (30e) durch einen Schenkel (30e1) verlängert wird, der an der Spitze und entgegengesetzt dem Ausschnitt (30f) auf einer rechtwinkligen Nase (30e2) vorgesehen ist, die anschlagartig mit einem rechtwinkligen Schenkel (6e) einer senkrechten Passfeder (6f) des Sektors (6) zusammenarbeiten kann ; und dass die beiden Nasen (30d1) und (30e2) in geeigneter Weise winklig versetzt sind, um eine begrenzte Verschwenkungstragweite ($\delta$) des Sektors (30) mit Bezug auf den feststehenden Sektor (6) zu ermöglichen.

17. Vorrichtung nach dem Anspruch 16, dadurch gekennzeichnet, dass der eine der zwei Anschläge (30d1) oder (30e2) zur Veränderung des Winkels ($\delta$) verstellbar ist.

18. Vorrichtung nach Anspruch 10, dadurch gekennzeichnet, dass ein geeigneter Teil des Hebels einen Registrierfinger aufweist, der mit auf einem entsprechenden, gegenüberstehnden Teil des beweglichen Sektors (30) markierten Merkzeichen zusammenarbeitet.

19. Vorrichtung nach einem der Ansprüche 1 und 10, bei welcher der Schaltgang gemäss dem Typ mit verformbarem Parallelogram ausgeführt wird und in der Hauptsache einen Obertragbügel (1) und einen Untertragbügel (2) aufweist, die gelenkig für die Querverschiebung einer auf dem Unterbügel (2) vorgesehenen Kettenführung durch zwei Stängchen (3) angeschlossen sind, dadurch gekennzeichnet, dass ein Teil des Obertragbügels (1) eine Drehungsfeder (20) aufnimmt, deren beide Endtrumm (20a) und (20b) von einem Kurbelzapfen (21) ab durchgekreuzt werden und beiderseitig eines insbesondere auf einem Teil des Untertragbügels (2) vorgesehenen Ansatzes (25) parallel liegen, wobei der genannte Kurbelzapften (21) einem Teil zugeordnet ist, der für Winkelverschiebung unter der Zugwirkung des Steuerungskabels (C) und für Rückführung in Stellung durch ein federndes Organ eingerichtet ist, um in die eine oder in die andere Richtung den Unterbügel (2) in Kombination mit der Feder (20) gemeinsam mitzunehmen.

20. Vorrichtung nach Anspruch 19, dadurch gekennzeichnet, dass der Kurbelzapfen (21) stirnseitig hinausragend aus einer auf einer mit dem Bügel (1) festgemachten Achse (23) drehbar montierten Trommel (22) und in Abhängigkeit von einer Rückführungsfeder (24) angeordnet wird, wobei die besagte Trommel und der Ansatz (25) zwischen den beiden Stängchen (3) und (4) des Parallelograms angebracht sind, indem die Feder (20) auf einer Verlängerung der Achse (23) aufgewickelt ist, und das auf der Trommel (9) des Steuerungshebels (10) aufgewickelte Steuerkabel (C) mit der Trommel (22) der Gangschaltung fest verbunden wird.

21. Vorrichtung nach Anspruch 20, dadurch gekennzeichnet, dass in der Nullstellung des Betätigungshebels (10) oder (31) und nach Einschalten eines oder mehrerer Schaltgänge, die Feder (20) in einer Gleichgewichtstellung ist, sodass die beiden Endtrumm (20a) und (20b), mit Bezug auf den Ansatz (25) keine Wirkung ausüben und unter keiner Einwirkung stehen, wobei nach Ausüben eines oder mehrerer Impulse auf den Hebel (10) für das Auswählen beim Stillstehen, d. h. vor dem Radfahren, eines oder mehrerer Schaltgänge, die Feder (20) verformt wird und der eine oder der andere der beiden Trumm (20a) bzw. (20b) (je nach der Richtung) unter der Reaktionskraft steht, die aus der Berührung des Trumms mit dem Ansatz (25) entsteht, indem die besagte Feder (20) im Lauf des Radfahrens ihre Gleichgewichtstellung wiederfindet.

22. Vorrichtung nach Anspruch 21, dadurch gekennzeichnet, dass der Ansatz (25) durch Mittel beeinflusst wird, die für das Überführungsverstellen dieses Ansatzes mit Bezug auf die Verzahnung eingerichtet sind, um den schaltgang auf die erste Verzahnung auszurichten.

23. Vorrichtung nach Anspruch 22, dadurch gekennzeichnet, dass der Ansatz (25) in einer in einer Lasche (26) gebildeten länglichen Öffnung (26a) montiert ist, wobei diese Lasche unmittelbar oder eingebaut auf dem Untertragbütel (2) vorgesehen wird ; und dass der genannte Ansatz durch eine überführungsfeste Schraube (27) durchquert ist, wobei die Schraube für die Verschiebung des Ansatzes durch geeignete Mittel (28) gedreht werden kann.

24. Vorrichtung nach Anspruch 22, dadurch gekennzeichnet, dass der Kurbelzapfen (21) und der Ansatz (25) den gleichen Durchmesser haben, wobei die beiden Trumm (20a) und (20b) der Feder (20) zugleich in Berührung mit dem besagten Kurbelzapfen und dem besagten Ansatz sind, sodass kein Spielraum an der Höhe des gesamten Parallelograms entstehen wird.

25. Vorrichtung nach Anspruch 22, dadurch gekennzeichnet, dass der Durchmesser des Kurbelzapfens (21) grösser als der Durchmesser des Ansatzes (25) ist, wobei die zwei Trumm (20a) und (20b) sich nur in Berührung mit dem besagten Kurbelzapfen (21) allein befinden, damit ein seitlicher Spielraum dem Gesamtparallelogram verleiht wird.

26. Vorrichtung nach den Ansprüchen 1 und 19 zusammen, dadurch gekennzeichnet, dass die Platte (8) einen für die Markierung der dem Gangzahl entsprechenden Ziffern geeigneten Teil (8e) aufweist, wobei die Trommel (9) mit einem diesen Ziffern gegenüberstehenden Zeigefinger (9d) ausgestattet ist.

FIG 17

FIG.15

FIG.16

FIG.1

FIG.2

FIG.3

FIG.4

FIG.6

FIG.5

2

FIG.7

FIG.8

FIG.9

FIG.10

FIG.11

FIG.12

FIG.13

FIG.14

**FIG.18**

**FIG.19**

**FIG.22**

**FIG.23**

FIG. 25

FIG. 26

FIG. 23

FIG. 24

FIG. 21